(19) Europäisches Patentamt
European Patent Office
Office européen des brevets

(11) EP 4 567 014 A1

(12) EUROPEAN PATENT APPLICATION

(43) Date of publication:
**11.06.2025 Bulletin 2025/24**

(21) Application number: **23307150.5**

(22) Date of filing: **06.12.2023**

(51) International Patent Classification (IPC):
***C04B 28/04*** *(2006.01)* ***C04B 24/24*** *(2006.01)*
*C04B 103/32* *(2006.01)*

(52) Cooperative Patent Classification (CPC):
(C-Sets available)
**C04B 28/04;** C04B 2103/32; C04B 2111/00017;
C04B 2111/00068; C04B 2111/00103 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Holcim Technology Ltd**
**6300 Zug (CH)**

(72) Inventors:
- **TOUSSAINT, Fabrice**
  **38070 SAINT QUENTIN FALLAVIER (FR)**
- **JUGE, Cédric**
  **38070 SAINT QUENTIN FALLAVIER (FR)**
- **GUILLON, Emmanuel**
  **38070 SAINT QUENTIN FALLAVIER (FR)**
- **TERMKHAJORNKIT, Pipat**
  **38070 SAINT QUENTIN FALLAVIER (FR)**

(74) Representative: **Regimbeau**
**20, rue de Chazelles**
**75847 Paris Cedex 17 (FR)**

# (54) COMPOSITION FOR LOW CARBON CONCRETE AND LOW WATER CONSUMPTION, PROCESS FOR PREPARING THIS COMPOSITION AND USE OF THIS COMPOSITION AS A SELF-COMPACTING CONCRETE

(57) The invention relates to composition for low carbon concrete and low water consumption, a process for preparing this composition, as well as the use of this composition as a self-compacting concrete.

EP 4 567 014 A1

(52) Cooperative Patent Classification (CPC): (Cont.)

C-Sets
**C04B 28/04, C04B 14/06, C04B 14/22,
C04B 14/24, C04B 14/28, C04B 14/106,
C04B 14/108, C04B 14/185, C04B 18/08,
C04B 18/141, C04B 18/146, C04B 18/167,
C04B 20/008, C04B 24/003, C04B 40/0028,
C04B 2103/0088;
C04B 28/04, C04B 14/06, C04B 14/28,
C04B 18/167, C04B 20/008, C04B 24/003,
C04B 40/0028;
C04B 28/04, C04B 14/06, C04B 14/28,
C04B 18/167, C04B 20/008, C04B 24/243,
C04B 40/0028, C04B 2103/0005;
C04B 28/04, C04B 14/06, C04B 14/28,
C04B 18/167, C04B 20/008, C04B 24/2652,
C04B 40/0028, C04B 2103/32;**
C04B 2103/32, C04B 24/003, C04B 24/246

## Description

The invention addresses the reduction of consumption of water for concrete production. The invention relates to composition for low carbon concrete and low water consumption, a process for preparing this composition, as well as the use of this composition as a self-compacting concrete.

Concrete is a very widely used construction material with high strength and good durability. In addition to sand and/or aggregates and water, it also usually contains Portland cement as a hydraulic binder, which produces strength-forming phases by solidifying and curing in contact with water. Concrete based on Portland cement clinker is thus one of the most important binders worldwide.

The production of Portland clinker results in high carbon dioxide emissions, emitted during the calcination and decarbonation of the raw materials, and from the burning of the fuels to heat the kiln to the desired temperature of about 1 '450°C. The carbon dioxide footprint of the cement can be reduced by substituting Portland clinker by various mineral components. The use of mineral components in Portland cement has been an established practice for more than 100 years and is regulated in numerous cement and concrete standards.

Ready-Mixed Concrete requires 150 to 200 liters per $m^3$ of water to ensure hydraulic binder hydration as well as workability. Indeed, fresh concrete must remain fluid in order to be properly casted into formworks. Concrete homogeneity is ensured, after casting, by using vibration needles or similar methods which allow to eliminate excess air bubbles, honeycombs and ensure proper rebar cover as well as closed surface.

To simplify the jobsite management, self-compacting concretes have been developed. Self-compacting concretes are concretes which workability and mix design avoids the use of vibration methods to ensure concrete homogeneity. Their fluidity is obtained by increasing the water content compared to concretes requiring vibration.

When aiming to reduce water content below 120 L/$m^3$ or even 100 L/$m^3$, concretes become harder to cast and compact to ensure proper homogeneity. Energy of placing must be increased and except for precast concrete where specific vibration equipment can be adapted, it becomes impossible to obtain a homogeneous self-compacting ready-mixed concrete with water content below 120L/$m^3$ without air void or honeycomb.

The present invention aims at solving this problem, by providing a composition for low carbon concrete which can be used in self-compacting with a reduced water consumption. This composition is characterized by a low content of water and a low content of hydraulic binder. The present invention is also directed to a method of preparation of this composition for low carbon concrete. Thanks to a reduced content in Portland cement, emissions of carbon dioxide during manufacturing are also reduced.

## OBJECT OF THE INVENTION

The invention is directed to a composition for low carbon concrete comprising per cubic meter [$m^3$] of concrete:

- less than 100 kg of CEM I;
- from 350 to 500 kg of mineral addition;
- more than 10 kg of a superplasticizer composition comprising from 30% to 50% by weight a superplasticizer which comprises at least one phosphonic amino-alkene group, and optionally water;
- Water;
- Sand and/or aggregates;
- The total water amount per cubic meter of the concrete being less than 120 L/$m^3$.

Advantageously, one or several, advantageously all, of the following conditions are satisfied:

- The composition comprises less than 80 kg/$m^3$ of CEM I, preferably from 50 kg/$m^3$ to 80 kg/$m^3$ of CEM I;
- total water content of the composition is less than 110 L/$m^3$, preferably less than 105 L/$m^3$;
- in the composition, the mass ratio of total water to CEM I ratio ranges from 1.0 to 1.35.

The mineral addition is advantageously selected from material containing calcium carbonate such as limestone; or material containing calcium carbonate, such as limestone, and mineral components (MIC); or material containing calcium carbonate, such as limestone, and recycled concrete fines (RCF); or recycled concrete fines (RCF); and any combinations thereof. Preferably, the mineral addition comprises limestone at a content of at least 100 kg/$m^3$.

Limestone is preferably in the form of particles whose maximal volume equivalent sphere diameter is 1000 $\mu$m and having the following granulometric distribution, % are expressed in weight compared to the total weight of limestone:

- At least 20%, preferably from 20% to 60%, of particles have a volume equivalent sphere diameter below 4 $\mu$m;
- from 20% to 40%, preferably from 25% to 35%, of particles have a volume equivalent sphere diameter ranging from 8

μm to 40 μm;
- from 2% to 40%, preferably from 5% to 20%, of particles have a volume equivalent sphere diameter ranging from 40 μm to 1000 μm.

In particular, from 20% to 30%, of limestone particles have a volume equivalent sphere diameter ranging from 1 μm to 4 μm.

Advantageously, the composition further comprises a cationic polymer having a cationic charge density strictly higher than 0.5 meq/g, preferably strictly higher than 1.0 meq/g, and preferably an intrinsic viscosity less than 1 dLL/g. The cationic polymer content preferably ranges from 0.0001% to 2% by weight, preferentially from 0.001% to 1.5% by weight, more preferentially from 0.01% to 1.5% by weight of the total weight of the CEM I.

Advantageously, in the composition, the total amount of CEM I, mineral addition, sand and/or aggregates, and water, is above 90 % by volume, preferably between 90 and 99 % by volume, more preferably between 95 and 99 % by volume, with respect to the total volume of the composition.

Advantageously, the composition comprises sand and aggregates, preferably the aggregates are composed of two fractions: a coarser fraction having a mean dimension comprise between 10 and 25 mm, preferably around 18 mm; and a finer fraction having a mean dimension comprised between 4 and 10 mm, or between 4 and 11 mm, or between 4 and 12 mm.

The invention is also directed to a process for preparing a composition according to the invention, comprising premixing the CEM I and part or all of the mineral addition, and in a subsequent step adding water, the aggregates and/or sand, the superplasticizer composition, and optionally the rest of the mineral addition, to the premix.

The invention is also directed to a process for preparing a composition according to the invention, comprising premixing the CEM I, the mineral addition, the superplasticizer composition, and sand and/or aggregates, and in a subsequent step adding water to the premix.

The invention is also directed to the use of a composition according to the invention or as prepared according to the invention, as a self-compacting concrete.

**DEFINITIONS and METHODS**

As used herein, the term "concrete" refers to a composition comprising hydraulic binder and sand and/or aggregates which in presence of water forms a paste which sets and hardens by means of hydration reactions and processes and which, after hardening, retains its strength and stability even under water. Specifically, concrete is as defined in standard NF EN 206 of November 2014.

As used herein, the term "Ready-Mixed Concrete" means concrete that is manufactured in a batch plant, according to each specific job requirement, then delivered to the job site "ready to use".

As used herein, the term "Self-Compacting Concrete" means concrete that has an ability to flow under its own weight, to fill the required space or formwork completely and to produce a dense and adequately homogenous material without a need for vibrating compaction.

As used herein, the term "superplasticizer" refers to a component which reduces the amount of mixing water by 5% to 30% in weight, preferably by 10% to 30% in weight, for a given workability. Superplasticizers that reduce the amount of mixing water by 15% to 30% in weight are also called water reducing agents.

<u>Determination of D10, D50, D90, D97 of particles distribution</u>

The D10 corresponds to the 10th centile of the volume distribution of particle sizes, i.e. 10% of the volume consists of particles for which the size is less than D10 and 90% with a size greater than D10. The D50 corresponds to the median or 50th centile of the volume distribution of particle sizes, i.e. 50% of the volume consists of particles for which the size is less than D50 and 50% with a size greater than D50. The D90 corresponds to the 90th centile of the volume distribution of particle sizes, i.e. 90% of the volume consists of particles for which the size is less than D90 and 10% with a size greater than D90. The D97 corresponds to the 97th centile of the volume distribution of particle sizes, i.e. 97% of the volume consists of particles for which the size is less than D97 and 3% with a size greater than D97.

The D10, D50, D90, D97 of particles is generally determined by laser diffraction. The particle size distributions of the different powders are obtained with a laser Malvern MS2000 granulometer. The measurement is carried out in a suitable medium (for example, in an aqueous medium); the size of the particles should be comprised between 0.02 μm and 2 mm. The light source consists of a red He-Ne laser (632 nm) and a blue diode (466 nm). The optical model is the Fraunhofer one, the computation matrix is of the polydisperse type.

A measurement of background noise is first of all carried out with a pump rate of 2,000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not

the case, the lenses of the cell have to be cleaned.

A first measurement is then carried out on the sample with the following parameters: pump rate of 2,000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out with a duration between the immersion and the measurement set to 10 s. The measurement duration is of 30 s (30,000 analyzed diffraction images). In the obtained granulogram, the fact that a portion of the population of the powder may be agglomerated should be taken into account.

Next a second measurement (without emptying the tank) is then carried out with ultrasonic waves. The pump rate is brought to 2,500 rpm, the stirring to 1,000 rpm, the ultrasonic waves are 100 % emitted (30 Watts). This rate is maintained for 3 minutes, and then one returns to the initial parameters: pump rate 2,000 rpm, stirrer rate of 800 rpm, absence of ultrasonic waves. After 10 s (for removing the possible air bubbles), a measurement is made for 30 s (30,000 analyzed images). This second measurement corresponds to a powder de-agglomerated by ultrasonic dispersion.

Each measurement is repeated least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

Molecular weight of cationic polymer

The molecular weight of the cationic polymers can be determined by chromatographic analysis or from the intrinsic viscosity according to the formula of Mark-Houwink:

$$IV = K.Mr^a$$

IV: intrinsic viscosity
Mr: average molecular weight
K and a: constants depending on the polymer, the solvent and the temperature.

The measurements of the intrinsic viscosity of the cationic polymers are done with a capillary viscometer such as the Ubbelhode type in a solution of 3M NaCl at 25°C.

The flowing time of the solvent and the solutions of the polymer at different concentrations are measured in a capillary tube between two marks. The intrinsic viscosity is obtained from the « reduced » viscosities at different concentrations.

For more details concerning this measurement, the following work is recommended: Encyclopedia of Polymer Science & Technology, Editors Mark and Gaylord, published John Wiley & Sons, 1971, Vol.14, p. 717-740.

Charge density of cationic polymer

The density of the cationic charge (cationicity) given in meq/g represents the quantity of charges (in mmol) carried by 1g of polymer. This value can be measured by colloidal titration or by pH titration.

The charge density of a cationic polymer can be measured by an anionic polymer with a known level of ionicity, for example potassium polyvinylsulphate, in the presence of an indicator for which the color depends on the nature of the excess polymer.

Specifically, the cationicity can be determined in the following manner:
60 ml of a buffer solution of sodium phosphate at 0.001 M, pH 6 and 1 ml of o-toluidine blue solution at $4.1.10^{-4}$ M, then 0.5 ml of cationic polymer solution to be measured are introduced into an appropriate container.

This solution is titrated with a solution of potassium polyvinylsulphate until the indicator changes.

The cationicity is obtained with the following relationship:

$$\text{Cationicity (meq/g)}=(V_{epvsk} \times N_{pvsk})/(V_{pc} \times C_{pc})$$

where:

$V_{pc}$ is the volume of cationic polymer solution;
$C_{pc}$ is the concentration of cationic polymer in solution;
$V_{epvsk}$ is the volume of potassium polyvinylsulphate solution; and
$N_{pvsk}$ is the normality of the potassium polyvinylsulphate solution.

Slump flow of concrete

Slump flow is measured according to the protocol described in the standard NF EN 12350-8 (June 2019)

Compressive strength of concrete

The compressive strength is measured in agreement with the standard NF EN 1992-1-1.

Air content of concrete

The air content is measured in agreement with the standard *NF EN 12350-7*

Definitions

According to the invention "A and/or B" means A, or B, or A and B.
Unless expressed differently, when ranges are described as "between X and Y", or "from X to Y" herein, this means that the bounds X and Y of the range are included.

## DESCRIPTION OF THE FIGURE

Figure 1 indicates the distribution in weight of volume equivalent sphere diameter expressed in $\mu$m for the limestone components used in the examples: Betocarb F-OM (grey line), Filafluid (dashed line) and Filler la Couronne (dotted line).

## DETAILED DESCRIPTION

The invention relates to a composition for low carbon concrete comprising per cubic meter [$m^3$] of concrete:

- less than 100 kg of CEM I;
- from 350 to 500 kg of mineral addition;
- more than 10 kg of a superplasticizer composition comprising from 30% to 50% by weight a superplasticizer comprising at least one phosphonic amino-alkene group;
- Water;
- Sand and/or aggregates;
- The total water amount per cubic meter of the composition being less than 120 L/$m^3$.

Advantageously, the composition has a low total water content but can be used for self-compacting concrete.
Moreover, the low CEM I content makes the composition suitable for low carbon concrete. The composition has good properties of low yield stress value and compressive strength, as detailed below.
The constituents of the composition are as disclosed below.

CEM I

According to the present invention, the concrete comprises a CEM I as defined in the standard EN197-1 of April 2012. According to this standard, CEM I usually comprises 90% to 97% by weight of Portland clinker, the remainder being composed of secondary components and setting regulators such as gypsum or anhydrite.
Portland clinker is as defined in the standard EN197-1 of April 2012, and is made by sintering a precisely specified mixture of raw materials (raw meal, paste or slurry) containing elements, usually expressed as oxides, CaO, SiOz, $Al_2O_3$, $Fe_2O_3$ and small quantities of other materials. The raw meal, paste or slurry is finely divided, intimately mixed and therefore homogeneous. Portland clinker is a hydraulic material which shall consist of at least two-thirds by mass of calcium silicates (3CaO SiOz and 2CaO $SiO_2$), the remainder consisting of aluminium and iron containing clinker phases and other compounds. The weight ratio (CaO)/($SiO_2$) shall be not less than 2.0 and the content of magnesium oxide (MgO) shall not exceed 5.0 % by weight, compared to the total weight of the Portland clinker.
The content of CEM I in the composition for low carbon concrete is less than 100 kg/$m^3$. According to a preferred embodiment, the content of CEM I in the composition is less than 80 kg/$m^3$, preferably from 50 kg/$m^3$ to 80 kg/$m^3$ of CEM I.

Mineral addition

The mineral addition can be blast furnace slag (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), limestone components (for example, as defined in the "Concrete" NF P 18-508 Standard), silica fume (for example, as defined in the European NF EN 197-1 Standard of April 2012, paragraph 5.2.7), siliceous components (for example, as defined in the "Concrete" NF P 18-509 Standard), metakaolin or mixtures thereof. The mineral component may also be ground construction demolition waste.

Examples of siliceous components are ground glass, solid or hollow glass beads, glass granules, expanded glass powder or closed cell expanded perlite.

The content of mineral addition in the composition for low carbon concrete is from 300 to 600 kg/m3. According to a preferred embodiment, the content of mineral addition in the composition is from 300 to 600 kg/m3, more preferably from 400 to 550 kg/m3. According to a preferred embodiment, the mineral addition is selected from:

- material containing calcium carbonate such as limestone;
- material containing calcium carbonate, such as limestone, and mineral components (MIC);
- material containing calcium carbonate, such as limestone, and recycled concrete fines (RCF);
- RCF; and
- any combinations thereof.

MIC are mineral addition different from material containing calcium carbonate. Therefore, MIC can be slag, pozzolanic materials, fly ash, calcined schists, silica fume, and/or siliceous components. The mineral component may also be ground construction demolition waste.

According to a preferred embodiment, the mineral addition comprises limestone, Preferably, the composition for low carbon concrete comprises at least 100 $kg/m^3$ of limestone. The composition for low carbon concrete can comprise from 100 to 500 $kg/m^3$ of limestone, preferably from 200 to 500 $kg/m^3$ of limestone, more preferably from 300 to 500 $kg/m^3$ of limestone.

According to another preferred embodiment, the mineral addition comprises RCF. Preferably, the composition for low carbon concrete comprises up to 500 $kg/m^3$ of RCF. The composition for low carbon concrete can comprise from 100 to 500 $kg/m^3$ of RCF, preferably from 200 to 400 $kg/m^3$ of RCF.

The recycled concrete fines (RCF) are concrete particles resulting from construction and demolition wastes as defined in EN 197-6 of June 2023. It is a common approach to crush the concrete wastes into particles with appropriate size to be used as coarse or fine aggregates in new concretes. This process further generates fines particles, with a D50 generally less than 0.15 mm. The main components of these fines particles are usually hydrated calcium silicate, unhydrated cement particles, calcium hydroxide (CH) and fines of aggregates.

The limestone is as defined in the standard EN197-1 of April 2012. It comprises ground calcium carbonate, the calcium carbonate content calculated from the calcium oxide content is at least 75% by weight of the weight of the limestone. Preferentially, the clay content, determined by the methylene blue test in accordance with EN 933-9 of June 2013, shall not exceed 1.2% by weight of the total weight of the limestone. The total organic carbon (TOC) content, when tested in accordance with EN 13639 of September 2017, shall not exceed 0.5% by weight of the total weight of the limestone.

Advantageously, limestone is in the form of particles having a D97 less than or equal to 1000 µm, preferably less than or equal to 800 µm, more preferably less than or equal to 500 µm, even more preferably less than or equal to 400 µm. Advantageously, limestone is in the form of particles having a D90 less than or equal to 800 µm, preferably less than or equal to 600 µm, more preferably less than or equal to 500 µm, even more preferably less than or equal to 300 µm. Advantageously, limestone is in the form of particles having a D50 ranging from 1 to 40 µm, advantageously ranging from 3 to 30 µm.

Advantageously, the limestone is in the form of particles whose maximal volume equivalent sphere diameter is 1000µm and having the following granulometric distribution, % are expressed in weight compared to the total weight of limestone particles:

- At least 20%, preferably from 20% to 60%, more preferably from 20% to 50%, of particles have a volume equivalent sphere diameter below 4 µm, preferably ranging from 0.5 µm to 4 µm. Preferably, from 20% to 30%, of particles have a volume equivalent sphere diameter ranging from 1 µm to 4 µm;
- from 20% to 40%, preferably from 25% to 35%, of particles have a volume equivalent sphere diameter ranging from 8

µm to 40 µm;

- from 2% to 40%, more preferably from 5% to 20%, of particles have a volume equivalent sphere diameter ranging from 40 µm to 1000 µm.

Advantageously, the limestone is composed of several fractions, such as two or three fractions, characterized by different fineness's. Using several fractions of limestone has the advantage of improving the particle packing density of the concrete. This will improve both the rheology and the strength development of the resulting concrete.

<u>Superplasticizer composition</u>

The composition according to the invention comprises at least 10 kg/$m^3$ of a superplasticizer composition.
According to a preferred embodiment, the content of the superplasticizer composition in the composition for low carbon concrete is at least 10 kg/$m^3$.
The content of the superplasticizer composition in the composition for low carbon concrete is preferably less than 30 kg/$m^3$. According to a preferred embodiment, the content of the superplasticizer composition in the composition is less than 20 kg/$m^3$, more preferably less than 15 kg/$m^3$.
The superplasticizer composition comprises from 30% to 50% by weight, compare to the total weight of the superplasticizer composition, of a superplasticizer comprising at least one phosphonic amino-alkene group.
The superplasticizer composition further comprises a suitable water-miscible solvent, preferably water.
The superplasticizer comprising at least one phosphonic amino-alkene group is preferably the sole component having the function of superplasticizer in the superplasticizer composition. The superplasticizer comprising at least one phosphonic amino-alkene group preferably comprises at least two phosphonic amino-alkene groups.
One of the gist of the invention lies particularly in this high dosage content of the superplasticizer composition and in the nature of the superplasticizer. Indeed, a superplasticizer which comprises, preferably consists in, a polycarboxylate, has shown not to be workable as it will be shown in the examples.
Examples of the superplasticizer comprising at least one phosphonic amino-alkylene group can be found in the patent EP 0663892 or in WO 2011/015781. They are compounds comprising at least one phosphonic amino-alkylene group, preferably two or more, and preferably a poly oxyalkylene chain. These compounds preferably comprise a diphosphonate group.
The superplasticizer comprising at least one phosphonic amino-alkylene group advantageously corresponds to compounds having following Formula (1): in which:

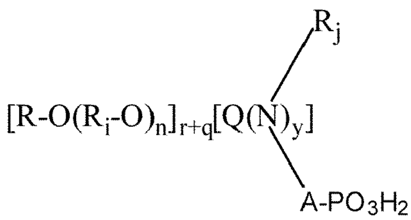
(1)

- R is a hydrogen atom or a monovalent hydrocarbon group with 1 to 18 carbon atoms and optionally one or more hetero atoms;
- the $R_i$ are similar or different and represent an alkylene for example ethylene, propylene, amylene, octylene or cyclohexene or an arylene, for example styrene or methylstyrene, the $R_i$ optionally comprising one or more hetero atoms;
- Q is a hydrocarbon group with 2 to 18 carbon atoms and optionally one or more hetero atoms;
- A is an alkylidene group with 1 to 5 carbon atoms;
- the $R_j$ are similar or different and may be selected from:

  *the $A\text{-}PO_3H_2$ group, A having the aforesaid meaning;
  *an alkyl group with 1 to 18 carbon atoms and being able to carry $[R\text{-}O(R_i\text{-}O)_n]$ groups, R and $R_i$ having the aforesaid meanings;
  *and the group:

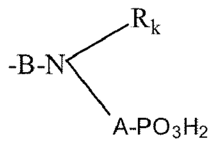

- ▪ $R_k$ designating a group such as $R_j$;
- ▪ B designating an alkylene group carrying 2 to18 carbon atoms;

- "n" is a number greater than or equal to 0;
- "r" is the sum of the $[R\text{-}O(R_i\text{-}O)_n]$ groups carried by all the $R_j$;
- "q" is the number of $[R\text{-}O(R_i\text{-}O)_n]$ groups carried by Q;
- the sum "r+q" is from 1 to 10;
- "y" is an integer from 1 to 3;
- Q, N and the $R_j$ can form together one or more cycles, this or these cycles further being able to contain one or more other hetero atoms.

For avoidance of doubts, N stands for nitrogen.

The compounds or the salts of the compounds according to Formula (1) may be used. The salts of the compounds according to formula (1) may be stœchiometric or not, mixed or not, and are constituted with alkali metals, alkali earth metals, amines or quaternary ammoniums.

An example of a process for preparation of the compounds of Formula (1) is described in European Patent Application EP 0663892, page 9, line 10 to page 12, line 13, herein incorporated by reference.

Preferably compounds of Formula (1) satisfy one or many of the following recited definitions:

- R is a hydrogen atom, a methyl group, an ethyl group or a nonylphenol group. More preferably, R is a hydrogen atom;
- $R_i$ groups are selected from ethylene and propylene. Preferably, all $R_i$ groups are ethylene. When the majority or all of the $R_i$ groups are ethylene, the water-soluble or water-dispersing character of the compounds is increased;
- the Q group comprises 2 to12 carbon atoms, and preferably 2 to 6 carbon atoms. Advantageously, Q is selected from ethylene, cyclo-hexene or n-hexene;
- alkylidene A group carries 1 to 3 carbon atoms. Preferably A is methylene group;
- $R_j$ group, which is optionally in salt form, is selected from the $-CH_2\text{-}PO_3H_2$, methyl and $C_2H_4N(CH_2PO_3H_2)_2$ groups. Preferably $R_j$ represents the $-CH_2\text{-}PO_3H_2$ group;
- "n" ranges from 1 to 10 000, preferably from 1 to 500, more preferably from 1 to 250;
- sum "r + q" corresponds to the total number of polyoxyalkyl chains. Preferably this sum is less than 3. More preferably it is equal to 1.

In another embodiment, the superplasticizer comprising at least one phosphonic amino-alkylene group advantageously corresponds to compounds having following Formula (2):

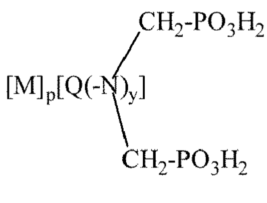
(2)

in which:

- M is a linear or branched hydrocarbon group (optionally in dendrimers) optionally comprising one or more hetero atoms (O, N, S); optionally of different natures;
- Q is a hydrocarbon group with 2 to 18 carbon atoms and optionally one or more hetero atoms;
- "p" is the number of groups [M] carried by Q, p ranges from 1 to 10; and
- "y" is an integer ranging from 1 to 3.

For avoidance of doubts, N stands for nitrogen.

The M group may be identical or different. Preferably, the M group does not comprise a phosphate group. Each M group may have a molar mass greater than 400 g/mol. The total molar mass of all the M groups of a same molecule is

preferably comprised from 1 000 to 10 000 g/mol.

Preferably, the number p is less than twice the number y. Preferably p ranges from 1 to 5.

Preferably the Q group comprises 2 to 12 carbon atoms, and preferably 2 to 6 carbon atoms. Advantageously, Q is selected from ethylene, cyclo-hexene or n-hexene.

The following compound of formula (3) is particularly preferred:

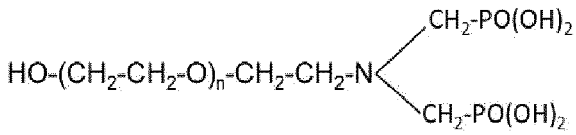

(3)

With n ranging from 40 to 55, preferably from 42 to 50. When they are in the state of salt, the compounds according to Formula (1), (2) and (3) are preferably sodium, calcium or diethanolamine salts.

Cationic polymer

The composition for low carbon concrete according to the invention can optionally comprise a cationic polymer. Said polymer has preferably a cationic charge density strictly higher than 0.5 meq/g, preferably strictly higher than 1.0 meq/g. Examples are disclosed in WO 2006/032785, WO 2007/090948 and WO 2011/107704. The cationic polymer is advantageously as further detailed below.

The cationic polymer in the composition has preferably a cationic charge density less than 10 meq/g.

The cationicity is measured at a pH strictly inferior to 7.

The cationic polymer in the composition has preferably a molecular weight expressed by an intrinsic viscosity less than 1 dL/g, preferably less than 0.8 dL/g and more preferably less than 0.6 dL/g. The cationic polymer in the composition has preferably a molecular weight expressed by an intrinsic viscosity above 0,1 dL/g.

Preferably, the cationic polymer is water-soluble.

The polymer can have a linear, comb or branched structure, preferably a linear structure or a comb structure.

The cationic polymer preferably comprises cationic groups selected from phosphonium group, pyridinium group, sulphonium group, quaternary amine group and combinations thereof. Quaternary amine groups are preferred. For note, the polymer can comprise tertiary amine groups or imine groups which are quaternized by protonation in an acidic medium, i.e., at a pH < 7. The cationic groups can be located on the main chain or on the side groups of the polymer.

The cationic polymer is preferably a comb-polymer comprising polyoxyalkylenated groups as side groups.

The cationic polymer can be obtained directly by a known polymerization process, such as radical polymerization, polycondensation or polyaddition, post-synthetic modification of a polymer, as disclosed in WO2006/032785, WO2007/090948 and WO2011/107704. In the context of the modification of polymers by grafting, mention may be made of grafted natural polymers, for example cationic starches.

Specifically, the polymer can be obtained by polymerisation of monomers including cationic monomers, their precursors, and their combination.

Cationic monomers are preferably selected from diallyldialkylammonium salts, quaternized dialkylaminoalkyl (meth)acrylates, (meth)acrylamides N-substituted by a quaternized dialkylaminoalkyl, and their combinations.

Suitable precursors of cationic monomers are specifically monomers carrying amine or imine groups. The nitrogen can be quaternized after polymerization in a known way as disclosed in WO2006/032785, WO2007/090948 and WO2011/107704.

The polymerization can further be carried out with non-ionic monomers, preferably comprising a short chain, more preferably comprising from 2 to 6 carbon atoms. Preferably, non-ionic monomer is selected from methoxypolyethylene glycol (meth)acrylate, acrylamide, N-vinylpyrrolidone, hydroxyethyl (meth)acrylate, N-vinyl-N-methylacetamide, alkyl (meth)acrylates and combination thereof. Anionic monomers can also be present, provided that the polymer finally obtained remains cationic overall.

Specific examples of cationic polymers are:

- polyvinylamines. The quaternized polyvinylamines can be prepared as described in Patent US 5,292,441;
- polymers of the polyethyleneimine type are also appropriate. The latter are quaternized by protonation;
- polymers obtained by polycondensation of epichlorohydrin with a mono- or dialkylamine, in particular methylamine or dimethylamine. Their preparation has been described, for example, in Patents US 3,738,945 and US 3,725,312. The unit of the cationic polymer obtained by polycondensation of dimethylamine and epichlorohydrin can be represented as follows:

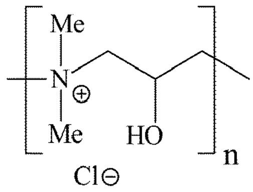

(I)

- polymers of the polyacrylamide type modified by Mannich reaction, for example polyacrylamide N-substituted by a dimethylaminomethyl group;
- polymers obtained by polycondensation of dicyandiamide and formaldehyde. These polymers and their process of preparation are described in Patent FR 1 042 084;
- polymers by condensation of dicyandiamide with formaldehyde in the presence of:

    A) a polyalkylene glycol; and/or
    B) a polyalkoxylated polycarboxylate, also known as PPC; and/or
    C) an ammonium derivative.

The polymers obtained by condensation of dicyandiamide with formaldehyde, optionally in the presence of other compounds, in particular of a polyalkylene glycol (A), of a polyalkoxylated polycarboxylate (B) and/or of a quaternization agent (C) are advantageously prepared as disclosed in WO2006/032785, page 6, line 21 to page 7, line 11 et page 8, lines 10 to 14, and page 9 lines 14-15, and page 10, line 3 to page 11, line 6, herein included by reference.

The polyalkylene glycol (compound A) is preferably a compound of formula (II):

$$R_7\text{-}O\text{-}[R_6\text{-}O]_n\text{-}R_8 \qquad \text{(II)}$$

in which:

$R_6$ is a $C_1$-$C_4$ alkyl group, preferably an ethyl and/or propyl group;
$R_7$ and $R_8$ are, independently of one another, a hydrogen atom or a $C_1$-$C_4$ alkyl group, preferably a methyl group; and
n is a number from 25 to 1 000.
By way of example, it can be polyethylene glycol, polypropylene glycol, an ethylene oxide/propylene oxide copolymer or a mixture of these different compounds. Preferably, it is polyethylene glycol.
The molecular weight, Mw, of compound A is preferably from 1 000 to 35 000 g/mol.

The polyalkoxylated polycarboxylate (compound B) is a comb polymer which comprises a main hydrocarbon chain to which both lateral carboxylic groups and alkoxylated groups are connected, in particular groups of propylene oxide (PO), ethylene oxide groups (EO) and/or combinations thereof. The lateral groups may be ionic or non-ionic. It is preferably a compound having the following formula (III): wherein

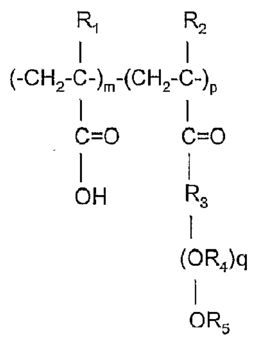

(III)

$R_1$ and $R_2$ are, independently of each other, a hydrogen atom or a methyl group;
$R_3$ and $R_4$ are, independently of each other, an $C_1$-$C_4$ alkylene group, preferably an ethylene or propylene group or one of the combinations thereof;
$R_5$ is a hydrogen atom or an $C_1$-$C_4$alkyl group preferably a methyl group;
m is a whole number from 2 to 100;

p is a whole number from 2 to 100; and
q is a whole number from 2 to 100.
The level of ester of the compound B, given by the ratio p/(m+p), may be from 10 to 60% and in particular from 20 to 40%.

The ammonium derivative (compound C) has as main role that of increasing the ionic nature of the polymer by introducing cationic functional groups. The ionic nature of the polymer contributes greatly to its solubility in water and to its affinity for clays, especially for swelling clays.

Preferably, the ammonium ion of the ammonium derivative is of following formula (IV):

$$NH(R_9)_3^+ \qquad (IV)$$

in which: the $R_9$ groups are identical or different and correspond to H or to a $C_1$-$C_6$ alkyl group.

Mention may be made, as examples of appropriate ammonium derivatives, of ammonium halides, for example ammonium chloride, ammonium bromide and ammonium iodide, ammonium sulphate, ammonium acetate, ammonium formate, ammonium nitrate or ammonium phosphate, ammonium formate being preferred.

Polymers obtained by polycondensation of epichlorohydrin with a mono- or dialkylamine are particularly preferred.

The cationic polymer content generally ranges from 0.0001% to 2% by weight, preferentially from 0.001% to 1.5% by weight, more preferentially from 0.01% to 1.5% by weight of the total weight of the CEM I.

Aggregates and/or sand

The composition of the invention comprises sand and/or aggregates. Preferably, the composition comprises sand and aggregates.

Any known sand suitable for the preparation of concrete is suitable for the present invention. The sand has advantageously a maximum size of 5 mm, preferentially 4 mm. The sand has advantageously a minimum size of 0.001 mm or of 0.063 mm. Preferably, the sand is a siliceous sand such as quartz sand, a calcined or non-calcined bauxite sand, a silica-calcareous sand or mixtures thereof.

The content of the sand in the composition is generally from 650 to 900 kg/$m^3$, more preferably from 700 to 800 kg/$m^3$.

Any known aggregates suitable for the preparation of concrete may be used for the present invention. The aggregates have advantageously a maximum size of 32 mm.

The aggregates have advantageously a minimum size greater than 4 mm and preferably greater than 5 mm and preferably a maximum less than or equal to 32 mm, preferably a maximum less than or equal to 28 and more preferably a maximum less than or equal to 25 mm.

Advantageously, the aggregates are composed of several fractions, such as two fractions, characterized by different finenesses. Using several fractions of aggregates has the advantage of improving the particle packing density of the concrete.

According to a preferred embodiment, the aggregates are composed of two fractions:

- a coarser fraction having a mean dimension comprised between 10 and 25 mm, preferably around 18 mm; and
- a finer fraction having a mean dimension comprised between 4 and 10 mm, or between 4 and 11 mm, or between 4 and 12 mm.

The total content of the aggregates in the composition is generally from 800 to 1200 kg/$m^3$, more preferably from 900 to 1100 kg/$m^3$. In a preferred embodiment the coarser fracture of the aggregates is in the range from 400 to 900 kg/m3, more preferably from 500 to 800 kg/m3 and the fine fraction is in the range from 100 to 700 kg/m3, more preferably from 200 to 600 kg/m3. In this preferred embodiment the particle packing is improved resulting in a concrete that has good rheological properties.

Water

The composition comprises water in a total water content of less than 120 L/$m^3$.

As used herein, the term "water" used with regard to the concrete composition preferably includes the water added for mixing and the water of the other components, in particular the water of the superplasticizer composition.

In a preferred embodiment, the total water content of the composition for low carbon concrete is less than 110 L/$m^3$, preferably less than 105 L/$m^3$.

Preferably, the mass ration of total water to CEM I (w/c) ratio ranges from 1.0 to 1.35 One of the gist of the invention lies particularly in the low content of water of the composition for low carbon concrete.

According to a preferred embodiment, the total amount of CEM I, mineral addition, sand and/or aggregates, and water, is above 90 % by volume, preferably between 90 and 99 % by volume, more preferably between 95 and 99 % by volume, with respect to the total volume of the composition.

Process for preparing the composition for low carbon concrete

The process for preparing the composition can be done by any known methods.

In one embodiment, the composition is prepared during a first step wherein the CEM I and part of or all of the mineral addition are premixed. The concrete composition can be prepared in a subsequent step wherein water, the aggregates and/or sand, the superplasticizer composition, and optionally the rest of the mineral addition, are added to the premix.

In another embodiment, the composition is prepared during a first step wherein the CEM I, the mineral addition, the superplasticizer composition, and sand and/or aggregates are premixed. The concrete composition can be prepared in a subsequent step wherein water is added.

According to the embodiments, the source of CEM I can thus be a CEM II cement for example.

In all embodiments, the mixing is done using a conventional mixer at a concrete mixing plant or directly in a drum-truck mixer, for a mixing time usual in the field.

The concrete composition of the invention may be cast to produce, after hydration and hardening a cast or precast article for the construction field. Such cast or precast articles, that comprise the concrete composition of the invention for the construction field include, for example, a slab, a floor, a screed, a foundation, a wall, a partition wall, a beam, a work top, a pillar, a bridge pier, a masonry block of concrete, optionally foamed concrete, a pipe, a conduit, a post, a stair, a panel, a cornice, a mold, a road system component (for example a border of a pavement), a roof tile, a surfacing (for example of a road), a jointing plaster (for example for a wall) and an insulating component (acoustic and/or thermal).

The invention makes it possible to respond to the need to reduce $CO_2$ emissions while having concrete composition whose rheology at fresh state is improved. Low carbon concrete compositions, because of their specific hydraulic binder composition, tend to be sticky and do not flow easily. The compositions used in this invention have been found to remedy this problem.

Advantageously, the resulting concrete complies with the mechanical requirements of the self-compacting concretes. In particular, its compressive strength is of at least 25 MPa at 28 days, typically in a range from 20 to 40 Mpa, preferably from 30 to 40 Mpa.

According to the invention, the slump flow at 5 min of said self-compacting concrete is above 500 mm, which makes to concrete composition suitable for use as self-compacting concrete.

The invention is also directed to the use of a composition as defined above or as prepared according to the process as defined above, as a self-compacting concrete.

The following example illustrates the invention without limiting it.

**Example:**

Raw materials:

**CEM I:** Le Teil CEM I 52.5 R comprising at least 95 % by weight Portland clinker

**Limestone (Ground Calcium Carbonate or GCC):** at least one of:

- Filler La Couronne. D50=16μm, D90=180μm, D97=320μm ; 26%<4μm, 39%<8μm, 38%>40μm
- Filafluid : D50 = 22μm, D90=120μm, D97=190μm ; 25%<4μm, 35%<μm, 38%>40μm
- Bétocarb F-OM supplied by Omya. D50=3 μm

The granulometric distribution is given in figure 1.

**Phosphonate type polymer:** commercial diphosphonate-based superplasticizer provided by Chryso under the commercial name Chryso Optima 100, abbreviated as Optima 100. Optima 100 has a solid content of 31 %-wt.

**Polycarboxylate:** MasterGlenium27 provided by Master Builders Solutions solid content of 21 %-wt.

**Cationic polymer:** cationic polymer provided by SNF, polycondensate of epichlorohydrin and dimethylamine, having a cationic charge density of 7.3 meq/g and an intrinsic viscosity of 0.04 dL/g under the commercial name FL2250. FL2250 has a solid content of: 55 %-wt.

- **Sand:** 0/4 (0-4 mm) from SCL Petite Craz.
- **Aggregates:** at least one of
- Fine aggregates: 6.3/10 (6.3-10 mm) from Cassis or 4/11.2 (4-11 mm) from SCL Petite Craz
- Coarse aggregates: 11/18 (11-18 mm) from Cassis or 10/16 (10-16 mm) from Saint Bonnet

The concretes were prepared taking into account the amount of water absorbed by the sand and aggregates and the amount of water added by the liquid admixtures.

The composition of the concretes is described in the following table.

| Material (kg/m$^3$) | | Mix 1 | Mix 2 | Mix 3 | Mix 4 |
|---|---|---|---|---|---|
| CEM I | Le Teil CEM I 52.5 R CE CP2 NF | 73.5 | 73.5 | 67.7 | 73.5 |
| Limestone | Filafluid | 363.6 | 363.6 | - | 363.6 |
| | Betocarb F_OM | 109.2 | 109.2 | - | 109.2 |
| | Filler La Couronne | - | - | 475.5 | - |
| Sand | 0/4 SCL Petite Craz | 747.2 | 747.2 | 747.2 | 747.2 |
| Fine Aggregate | Cassis 6.3/10 | 550.4 | - | 550.8 | 550.4 |
| | 4/11.2 SCL Petite Craz | - | 262.9 | - | - |
| Coarse Aggregate | Cassis 11/18 | 542.7 | - | 543.0 | 542.7 |
| | 10/16 Saint Bonnet | - | 792.4 | - | - |
| Admixture | Optima 100 | 13.191 | 13.191 | 13.116 | - |
| | FL 2250 | 0.804 | 0.804 | 0.80 | 0.804 |
| | Polycarboxylate | | | | 13.191 |
| Total water | | 100.9 | 105.4 | 100.9 | 100.9 |
| Concrete Slump flow (mm) | 5 min | 560 | 590 | 520 | *Does not flow* |
| Air content (%) | | 1.6 | 1.4 | 1.9 | n.m. |
| Compressive strength (Mpa) | 28 days | 35.9 | 31.0 | 32.3 | n.m. |
| n.m. = not measured | | | | | |

The concrete slump flow, compressive strength of the concrete compositions are measured. All tests are carried out at 20°C.

Mixes 1 to 3 are according to the present invention. Mix 4 is comparative since it comprises a superplasticizer composition different from the diphosphonate composition of the compositions Mix 1, Mix 2 and Mix 3 according to the invention.

It was not possible to measure a slump flow of the comparative composition Mix 4.

All the mixes according to the invention have a low water content (around 100 kg/m$^3$: 100.9 kg/m$^3$, 105.4 kg/m$^3$ and 100.9 kg/m$^3$), and a low cement content (around 70 kg/m$^3$: 73.5 kg/m$^3$ or 67.7 kg/m$^3$).

Their slump flow at 5 min is above 500 mm, confirming that the concrete composition can be used as self-compacting concrete. In addition, the resulting concrete has the target strength value of at least 25 Mpa at 28 days.

## Claims

**1.** Composition for low carbon concrete comprising per cubic meter [m$^3$] of concrete:

- less than 100 kg of CEM I;
- from 350 to 500 kg of mineral addition;
- more than 10 kg of a superplasticizer composition comprising from 30% to 50% by weight a superplasticizer which comprises at least one phosphonic amino-alkene group, and optionally water;
- Water;
- Sand and/or aggregates;

- The total water amount per cubic meter of the concrete being less than 120 L/$m^3$.

2. Composition according to claim 1, comprising less than 80 kg/$m^3$ of CEM I, preferably from 50 kg/$m^3$ to 80 kg/$m^3$ of CEM I.

3. Composition according to claim 1 or 2, wherein the total water content is less than 110 L/$m^3$, preferably less than 105 L/$m^3$.

4. Composition according to any one of claims 1 to 3, wherein the mass ratio of total water to CEM I ratio ranges from 1.0 to 1.35.

5. Composition according to any one of claims 1 to 4, wherein the mineral addition is selected from material containing calcium carbonate such as limestone; or material containing calcium carbonate, such as limestone, and mineral components (MIC); or material containing calcium carbonate, such as limestone, and recycled concrete fines (RCF); or recycled concrete fines (RCF); and any combinations thereof.

6. Composition according to any one of claims 1 to 5, wherein the mineral addition comprises limestone at a content of at least 100 kg/$m^3$.

7. Composition according to claim 6, wherein the limestone is in the form of particles whose maximal volume equivalent sphere diameter is 1000 μm and having the following granulometric distribution, % are expressed in weight compared to the total weight of limestone:

   - At least 20%, preferably from 20% to 60%, of particles have a volume equivalent sphere diameter below 4 μm;
   - from 20% to 40%, preferably from 25% to 35%, of particles have a volume equivalent sphere diameter ranging from 8 μm to 40 μm;
   - from 2% to 40%, preferably from 5% to 20%, of particles have a volume equivalent sphere diameter ranging from 40 μm to 1000 μm.

8. Composition according to claim 7, wherein from 20% to 30%, of particles have a volume equivalent sphere diameter ranging from 1 μm to 4 μm.

9. Composition according to any one of claims 1 to 8, further comprising a cationic polymer having a cationic charge density strictly higher than 0.5 meq/g, preferably strictly higher than 1.0 meq/g, and preferably an intrinsic viscosity less than 1 dLL/g.

10. Composition according to claim 9, wherein the cationic polymer content ranges from 0.0001% to 2% by weight, preferentially from 0.001% to 1.5% by weight, more preferentially from 0.01% to 1.5% by weight of the total weight of the CEM I.

11. Composition according to any one of claims 1 to 10, wherein the total amount of CEM I, mineral addition, sand and/or aggregates, and water, is above 90 % by volume, preferably between 90 and 99 % by volume, more preferably between 95 and 99 % by volume, with respect to the total volume of the composition.

12. Composition according to any one of claims 1 to 11, wherein the composition comprises sand and aggregates, preferably the aggregates are composed of two fractions: a coarser fraction having a mean dimension comprise between 10 and 25 mm, preferably around 18 mm; and a finer fraction having a mean dimension comprised between 4 and 10 mm, or between 4 and 11 mm, or between 4 and 12 mm.

13. Process for preparing a composition according to any one of claims 1 to 12, comprising premixing the CEM I and part or all of the mineral addition, and in a subsequent step adding water, the aggregates and/or sand, the superplasticizer composition, and optionally the rest of the mineral addition, to the premix.

14. Process for preparing a composition according to any one of claims 1 to 12, comprising premixing the CEM I, the mineral addition, the superplasticizer composition, and sand and/or aggregates, and in a subsequent step adding water to the premix.

15. Use of a composition as defined in any one of claims 1 to 12 or as prepared according to claim 13 or 14, as a self-

compacting concrete.

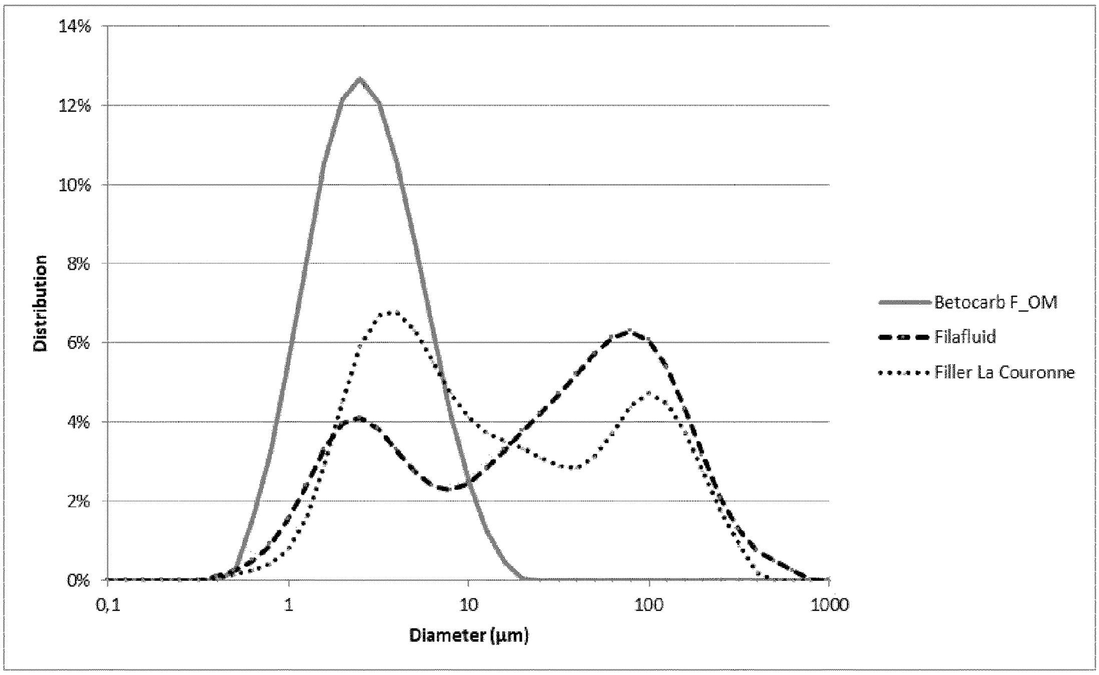
14%
12%
10%
8%
6%
4%
2%
0%
Distribution
0,1
1
10
100
1000
Diameter (µm)
Betocarb F_OM
Filafluid
Filler La Couronne

Fig. 1

Europäisches Patentamt
European Patent Office
Office européen des brevets

# EUROPEAN SEARCH REPORT

Application Number
EP 23 30 7150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/136435 A1 (HOLCIM TECHNOLOGY LTD [CH]) 30 June 2022 (2022-06-30)<br>* claim 1 *<br>* example 2, table 4, mix 1 * | 1-15 | INV.<br>C04B28/04<br>C04B24/24<br><br>ADD.<br>C04B103/32 |
| A | GB 2 377 930 A (RMC READYMIX LTD [GB]) 29 January 2003 (2003-01-29)<br>* claims 1,2,12,22 *<br>* page 9, lines 11, 23-27 *<br>* page 12, line 10 *<br>* title * | 1-15 | |
| A | GB 2 442 073 A (HUGHES FELIX ALLEN [GB]) 26 March 2008 (2008-03-26)<br>* claims 1-5,7 *<br>* page 2, line 17 *<br>* page 5, line 4 * | 1-15 | |
| A | LONG WU-JIAN ET AL: "Sustainable design and ecological evaluation of low binder self-compacting concrete", JOURNAL OF CLEANER PRODUCTION, ELSEVIER, AMSTERDAM, NL, vol. 167, 29 August 2017 (2017-08-29), pages 317-325, XP085180820, ISSN: 0959-6526, DOI: 10.1016/J.JCLEPRO.2017.08.192<br>* the whole document * | 1-15 | TECHNICAL FIELDS SEARCHED (IPC)<br><br>C04B |

The present search report has been drawn up for all claims

| Place of search | Date of completion of the search | Examiner |
|---|---|---|
| The Hague | 6 June 2024 | Zammit, Madalena |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 30 7150

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2024

| Patent document cited in search report | Publication date | Patent family member(s) | Publication date |
|---|---|---|---|
| WO 2022136435 A1 | 30-06-2022 | AU 2021405381 A1 | 13-07-2023 |
| | | CA 3205423 A1 | 30-06-2022 |
| | | EP 4263460 A1 | 25-10-2023 |
| | | US 2024116815 A1 | 11-04-2024 |
| | | WO 2022136435 A1 | 30-06-2022 |
| GB 2377930 A | 29-01-2003 | GB 2376462 A | 18-12-2002 |
| | | GB 2377930 A | 29-01-2003 |
| GB 2442073 A | 26-03-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0663892 A
- WO 2011015781 A
- WO 2006032785 A
- WO 2007090948 A
- WO 2011107704 A
- US 5292441 A
- US 3738945 A
- US 3725312 A
- FR 1042084


### Non-patent literature cited in the description


- Encyclopedia of Polymer Science & Technology. John Wiley & Sons, 1971, vol. 14, 717-740